# FASCICULE DE BREVET EUROPEEN

(11) **EP 1 839 946 B1**
(45) Date de publication et mention de la délivrance du brevet: **13.10.2010**
(21) Numéro de dépôt: 07290347.9
(22) Date de dépôt: 22.03.2007
(51) Int. Cl.: B60Q 3/02, B60N 3/14

(54) **Dispositif d'éclairage pour allume-cigare ou prise électrique multi-fonction**
Beleuchtungsvorrichtung für elektrischen Zigarrenanzünder oder multi-funktionelle elektrische Steckdose
Illuminating device for electric cigar lighter or multi-functional electrical socket

(30) Priorité: 31.03.2006 FR 0602843
(43) Date de publication de la demande: 03.10.2007
(73) Titulaire: VALEO VISION, 93012 Bobigny Cedex (FR)
(72) Inventeur: Andrieu, Michel, 81660 Bout du Pont de l'Arn (FR); Bonnet, Jean-Louis, 81240 Saint Amans val Thoret (FR); Lau, Francis, 81290 Labruguiere (FR); Monnot, Jérôme, 81660 Bout du Pont de l'Arn (FR)
(74) Mandataire: Tran, Chi-Hai

(56) Documents cités:
- EP-A- 1 727 170
- EP-A- 1 737 008
- EP-A2- 0 406 845
- EP-A2- 0 678 419
- DE-C1- 3 932 601
- FR-A- 2 595 132
- FR-A1- 2 436 939
- FR-A2- 2 320 211
- US-B1- 6 350 039

## Description

La présente invention concerne les allume-cigares électriques, ou les prises électriques multifonction, notamment destinés à équiper des véhicules automobiles. Elle se rapporte plus particulièrement aux moyens pour éclairer les allume-cigares ou prises multi-fonction, se présentant notamment sous forme de bagues éclairantes associées à un module éclairant.

De manière connue, les allume-cigares sont éclairés par une lampe montée dans un module d'éclairage. L'alimentation électrique de cette lampe est réalisée par l'intermédiaire de lames de matériau conducteur. Ces lames sont d'une part en contact électrique avec le corps de l'allume-cigare faisant masse. Elles sont d'autre part soit en contact avec une languette du connecteur, soit directement connectées au câble d'alimentation électrique. Un exemple de module d'éclairage porté par une bague éclairante d'un allume-cigare est décrit dans le brevet FR 2 758 111.

On cherche à améliorer la fiabilité et la longévité des lampes. C'est la raison pour laquelle il a été proposé dans la demande de brevet EP 0 819 575 de remplacer la lampe conventionnelle par une diode électroluminescente, généralement désignée sous l'abréviation anglaise de « led ». Les diodes ont en effet généralement une durée de vie plus longue que les lampes conventionnelles, et une consommation électrique moindre. Cependant, la disposition de la diode dans l'allume-cigare selon ce document ne donne pas entièrement satisfaction : elle ne permet pas d'éclairer le cendrier, et on peut craindre des fuites de lumière par réflexion sur le corps métallique de l'allume-cigare. Elle ne paraît pas non plus permettre beaucoup de souplesse dans son mode d'alimentation électrique. Son montage n'est pas très compact. Elle oblige aussi à utiliser un mode de soudure manuel des fils de connexion avec les contacts de frottement et de placer la diode, ainsi que la résistance et les contacts de frottement sur un coulisseau avant de les souder ensemble pour réaliser le circuit électrique.

Une première amélioration des modules éclairants à leds a été proposée dans le brevet EP 1 516 777 : il s'agit d'une bague éclairante sur laquelle est monté un module éclairant, ledit module éclairant comprenant un circuit imprimé muni d'au moins une diode électroluminescente, un capot destiné à loger au moins en partie le circuit imprimé, et au moins deux languettes d'alimentation électrique dudit circuit imprimé, fixées mécaniquement audit capot.

Un autre arrangement du dispositif d'éclairage est proposé dans le brevet FR 2436939.

Mais il reste possible d'améliorer encore la conception de ces modules éclairants, notamment sur le plan optique, pour que le flux lumineux émis par la diode électroluminescente soit mieux exploité, et sur le plan électrique et mécanique, pour que le montage du module éclairant et la réalisation de ses connexions électriques soient plus simples.

L'invention a alors pour but d'améliorer encore la conception des modules d'éclairage pour allume-cigare ou prise multi fonction. L'invention cherche notamment à mettre au point des modules d'éclairage utilisant des diodes électroluminescentes, et qui soient fiables et de longue durée de vie, mais qui soient aussi, par exemple, plus compacts et/ou plus faciles à monter de manière automatisée et/ou plus fiables quant à leur connexion électrique, et/ou plus efficaces en termes d'éclairement obtenu.

L'invention a tout d'abord comme objet un dispositif d'éclairage pour allume-cigare ou pour prise multi fonction, comportant un composant monobloc en matériau transmettant au moins partiellement la lumière, ledit composant comportant une bague éclairante et un logement pour un circuit imprimé muni d'au moins d'une diode électroluminescente et de moyens de connexion électrique, tel que :
- le composant monobloc comporte une partie intermédiaire entre la bague éclairante et le logement pour le circuit imprimé, ladite partie intermédiaire servant de guide de lumière pour conduire la lumière émise par la diode électroluminescente à la blague éclairante,
- ladite partie intermédiaire du composant monobloc présente un moyen pour prévenir la formation d'un point chaud de lumière dans la bague éclairante à l'aplomb de sa face d'entrée de la lumière,
- ledit moyen pour prévenir la formation d'un point chaud comporte un prisme et/ou un moyen de fixation du composant monobloc au reste de l'allume-cigare ou de la prise multi fonction du type nervure, languette
- ledit prisme et/ou ledit moyen de fixation font partie intégrante du composant monobloc et sont disposés sur le trajet direct de la lumière entre la face d'entrée de lumière et la zone de la bague éclairante à l'aplomb de ladite face d'entrée.

Au sens de l'invention, on comprend par circuit imprimé le ou les circuits imprimés déposé(s) sur son substrat et muni(s) de toutes les pistes conductrices et de tous les composants électroniques appropriés. Ce circuit imprimé peut également être muni d'une ou plusieurs résistances, condensateurs ou diodes.

L'invention s'applique indifféremment aux allume-cigare et aux prises multi fonction : une prise multifonction, notamment pour véhicule automobile, comporte un corps creux faisant office de prise de courant (que l'on peut comparer au corps d'allumage d'un allume cigare), qui comportant des moyens de connexion électrique et qui est destiné à coopérer avec une prise accessoire amovible (le corps d'allumage de l'allume-cigare coopérant, lui, avec un bouchon amovible fonctionnel, chauffant).

Comme déjà évoqué, utiliser des diodes est avantageux, car ce type de source lumineuse est fiable, de longue durée de vie et économe en consommation électrique.

L'invention a donc recours à une pièce unique, dite composant monobloc, à la fois pour maintenir le circuit imprimé et pour faire fonction de bague éclairante. Elle n'utilise plus de capot distinct comme décrit dans le brevet EP 1 516 777, ce qui est industriellement très intéressant : on peut mouler d'une pièce cet élément, ce qui simplifie et raccourcit la fabrication du module éclairant.

De préférence, le composant monobloc est en matériau transparent à base de polymère, notamment à base de polycarbonate, que l'on peut aisément mouler par injection, et qui présente les propriétés requises en termes de résistance thermique et mécanique.

Le composant monobloc peut être teinté en différentes couleurs.

Avantageusement, il comporte une partie intermédiaire entre la bague éclairante et le logement pour le circuit imprimé, ladite partie intermédiaire servant de guide de lumière pour conduire la lumière émise par la diode électroluminescente à la bague éclairante. Ce « guide de lumière intégré » peut en fait se présenter sous forme d'un prolongement de la bague éclairante, vers la source de la lumière, la diode électroluminescente, qui est adapté afin de canaliser au mieux cette lumière vers la bague. Concrètement, en contraignant la lumière émise par la diode électroluminescente à progresser par ce guide de lumière vers la bague, par réflexion totale des rayons lumineux dans ce guide, on augmente très significativement la quantité de lumière atteignant la bague, et on obtient ainsi des allume cigares nettement plus éclairés. Précédemment, notamment selon la conception décrite dans le brevet EP 1 516 777 précité, la lumière progressait de la diode électroluminescente vers la bague par diffusion de la lumière dans la bague et par réflexion sur le corps d'allumage entourant la bague, ce qui, sur le plan optique, favorisait les fuites de lumière.

Toujours pour limiter encore les fuites de lumière, on peut noircir/ rendre réfléchissante tout ou partie d'une des faces au moins du circuit imprimé.

De préférence, la partie intermédiaire du composant monobloc a un profil courbe, avec au moins un point d'inflexion, notamment deux. Alternativement, elle peut avoir un profil présentant au moins deux pans inclinés l'un par rapport à l'autre. Dans les deux cas, il s'agit d'adapter au mieux la forme de ce guide de lumière intégré pour permettre la réflexion totale des rayons lumineux qui s'y propagent, le guide étant défini par un profil délimité par deux parois.

Toujours dans le but de limiter les fuites de lumière, la partie intermédiaire du composant monobloc présente une face d'entrée destinée à collecter au mieux la lumière émise par la surface émittrice de la diode électroluminescente. Cette face sert de collimateur de la lumière qu'elle reçoit, et sa forme adaptée peut présenter une surface torique ou cylindrique. Toute surface concave venant « envelopper » au mieux le cône lumineux émis par la diode électroluminescente, le collimater, est possible.

Le plus généralement, la partie intermédiaire du composant monobloc est de forme globalement au moins partiellement annulaire, avec une forme de préférence évasée vers la bague éclairante. Par rapport à un module éclairant habituel, on a donc prolongé et évasé la bague en direction du fond du corps d'allumage, en direction de la diode électroluminescente. Cette partie intermédiaire non seulement joue le rôle de guide de guide de lumière, mais assure aussi la liaison mécanique entre la bague et le logement du circuit imprimé. Elle peut ne prolonger la bague que sur une partie de sa circonférence, pour assurer la liaison mécanique et optique avec le logement du circuit imprimé à diode électroluminescente qui, lui, peut être comparé à une jambe, à un appendice de forme de préférence allongée selon un axe parallèle à l'axe central de la bague (qui est également l'axe du corps d'allumage de l'allume-cigare).

Avantageusement, la partie intermédiaire du composant monobloc présente un moyen pour prévenir la formation d'un point chaud de lumière dans la bague éclairante à l'aplomb de sa face d'entrée de la lumière. En effet, il a été noté que la bague tendait à éclairer de façon plus forte la zone à l'aplomb de la face d'entrée du guide de lumière, donc juste « au dessus » du point d'injection de la lumière dans le composant monobloc. (zone du « point chaud »). Pour y parer, s'il est requis d'avoir une bague éclairant de façon très homogène, on prévoit un moyen pour que la trajectoire des rayons lumineux incriminés soit volontairement perturbée.

Cela peut être réalisé à l'aide d'un prisme faisant partie intégrante du composant monobloc et disposé sur le trajet direct de la lumière entre la face d'entrée de lumière et la zone de la bague éclairante à l'aplomb de ladite face d'entrée. Les rayons atteignant le prisme se trouvent alors renvoyés dans de multiples directions de façon contrôlée.

Cela peut être réalisé de façon encore plus simple, en disposant judicieusement un moyen de fixation du composant monobloc au reste de l'allume-cigare ou de la prise multifonction, du type nervure, languette, qui fait partie intégrante dudit composant monobloc et que l'on dispose sur le trajet direct de la lumière entre la face d'entrée et la zone de la bague à l'aplomb de ladite face d'entrée : le but est le même, les rayons atteignant la languette ou la nervure étant renvoyés dans les directions variées au lieu de poursuivre tous leur chemin direct vers la bague.

Optionnellement, la partie intermédiaire peut comprendre au moins une zone dédiée qui guide une partie de la lumière émise par la diode et se propageant dans la dite partie intermédiaire vers une face de sortie, notamment pour éclairer un accessoire à proximité de la bague : de par la forme adaptée localement de la partie intermédiaire, on divertit ainsi une partie de la lumière émise par la diode pour la faire sortir localement, afin qu'elle créer un spot de lumière, que l'on peut utiliser, par exemple, pour éclairer un cendrier dans le cas d'un allume-cigare.

Avantageusement, le dispositif précédemment décrit est associé à un circuit imprimé inséré au moins en partie dans le logement prévu dans le composant monobloc, le circuit imprimé étant muni d'une diode, et de deux languettes de connexion électrique, notamment fixées par soudure audit circuit.

Ces languettes soudées sont très avantageuses à utiliser : elles peuvent être de forme géométrique très simple à réaliser, en outre, cette fixation mécanique solide, par soudure, est très fiable, le contact mécanique, et donc électrique, étant plus sûr que lors de l'utilisation de languettes de connexion venant s'appuyer sur les surfaces conductrices du circuit par effet ressort.

Le circuit est notamment de type CMS, c'est-à-dire non traversant, appelé encore circuit imprimé de surface.

La diode est choisie de préférence de type « side emitter », c'est-à-dire à émission latérale : on peut ainsi avoir un circuit imprimé, qui se trouve substantiellement disposé dans un plan parallèle à l'axe de la bague et à celui du corps d'allumage, et une diode électroluminescente qui émet latéralement, également selon une direction principale parallèle à l'axe central de la bague : cette configuration facilite la conception du point d'injection de la lumière dans le composant monobloc, à savoir la face d'entrée précédemment décrite , et les rayons lumineux rentrent ainsi dans le composant avec déjà une direction globalement dirigée vers la bague.

Le circuit imprimé peut également être muni d'une seconde diode lumineuse, notamment de type à émission inverse (connue sous le terme anglais de diode « reverse gullwing ») : cette seconde diode peut être dédiée pour créer un spot de lumière apte à éclairer un accessoire voisin, comme un cendrier. On garde ainsi un unique circuit imprimé.

Une solution équivalente, moins économique et plus encombrante, consiste à utiliser deux circuits imprimés accolés, le premier muni de la diode destinée à alimenter en lumière la bague éclairante, le second muni d'une autre diode pour éclairer un accessoire type cendrier ou autre.

Le circuit imprimé est, par exemple, inséré dans le logement du composant monobloc à l'aide de moyens de guidage prévus dans le logement, notamment du type glissières. On peut ainsi prévoir deux glissières parallèles dans le logement coopérant avec les deux bords opposés du circuit imprimé.

Il est préférable que le circuit imprimé soit verrouillé mécaniquement dans le logement du composant monobloc, notamment à l'aide d'ergots dépassant de celui-ci et réalisant des butées l'empêchant de sortir du ou des glissières, et de cavités complémentaires présentes dans le capot, du type système de clipsage. Une légère déformation du circuit permet avantageusement à celui-ci de dépasser ces butées lors du montage.

L'invention concerne également l'allume-cigare tout entier, comportant le dispositif décrit plus haut, avec un corps d'allumage inséré dans le composant monobloc. Elle concerne aussi la prise multi-fonction toute entière, comprenant un corps creux faisant office de prise inséré dans le composant monobloc.

L'invention sera détaillée ci-après avec des exemples non limitatifs, à l'aide des figures suivantes :
- **Fig.1** **:** une vue en perspective éclatée montrant des composants d'un allume-cigare à bague éclairante, dont le composant monobloc et le circuit imprimé selon l'invention,
- **Fig. 2** **:** la vue des composants selon la figure précédente, après montage,
- **Fig. 3****:** une vue en coupe du composant monobloc et du circuit imprimé de l'allume cigare selon l'invention
- **Fig. 4a,4b****:** la vue de face du composant monobloc selon deux variantes de l'invention
- **Fig.5** **:** une vue en perspective du circuit imprimé muni de la diode électroluminescente et de ses languettes d'alimentation
- **Fig.6** **:** une vue en coupe d'une variante de circuit imprimé selon l'invention
- **Fig.7** **:** une vue en perspective du composant monobloc selon une variante

Les figures ne sont données qu'à titre indicatif, sont très schématiques afin d'en garantir la clarté, et ne sont pas nécessairement à l'échelle.

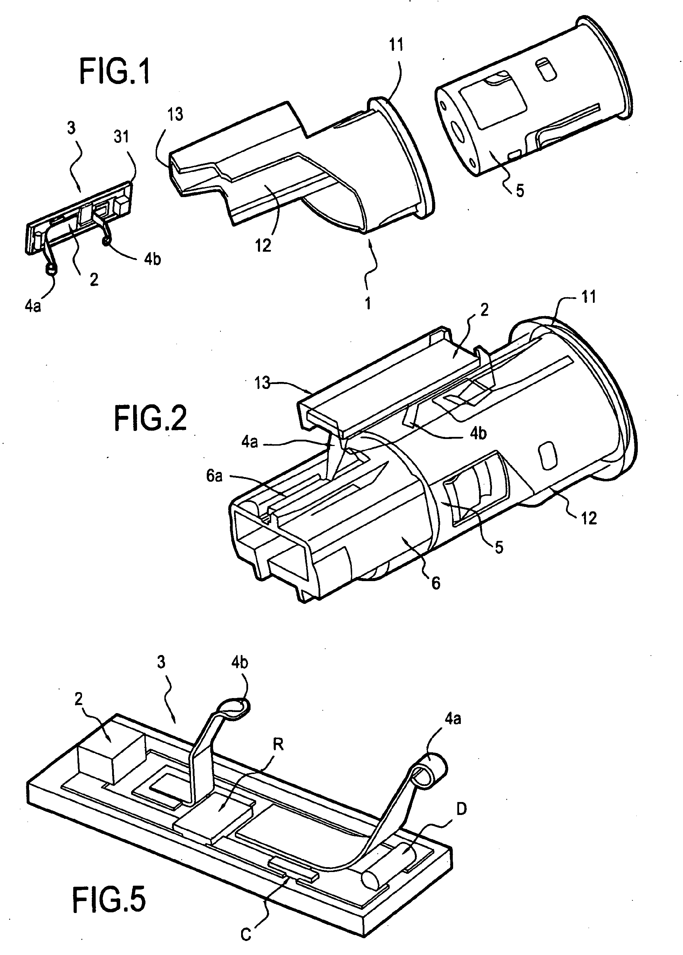

Les figures 1 et 2 représentent donc certains des composants d'un allume-cigare avec bague éclairante. Une description détaillée d'un allume-cigare complet peut être trouvée dans le brevet FR 2 758 111. La description ci-après se concentrera sur les caractéristiques plus spécifiques au module éclairant selon l'invention.

Cet allume-cigare comporte un corps d'allumage 5 pour réception et chauffage d'un bouchon chauffant amovible non représenté. Il comporte aussi un composant monobloc 1, entièrement moulé d'un bloc en polycarbonate translucide, dans lequel vient s'insérer au montage le corps d'allumage 5. Un connecteur 6 est fixé au corps d'allumage.

Le composant 1 comporte en fait trois parties :
- une bague éclairante 11 destinée à entourer le corps d'allumage 5 pour repérage la nuit de l'allume-cigare,
- un logement 13 destiné à accueillir le circuit imprimé 3 de type CMS, sur lequel sont soudées une diode électroluminescente 2 et deux languettes de connexion électrique 4a,4b,
- une partie intermédiaire 12 liant mécaniquement la bague 11 au logement 13 de forme allongée. Cette partie intermédiaire 12 va également servir de guide de lumière, et elle a, comme la bague, une forme globalement annulaire. On voit des figures 1,2, 3 et 4 que cette partie 12 est dissymétrique : elle ne « prolonge » la bague de façon annulaire que vers le logement 13, avec un profil de « raccord » ajustable. On a ainsi un composant monobloc 1 sous forme, grossièrement, d'un bague reliée localement à un jambage constitué par le logement 13 du circuit imprimé 3.

La bague 11 et/ou la partie intermédiaire 12 sont munies de moyens mécaniques du type ergots, butées, cavités, destinés à coopérer avec des moyens de forme complémentaire pour fixer le composant au corps d'allumage.

La connexion électrique du circuit imprimé 3 au connecteur 6 se fait de la façon suivante : une des languette de connexion 4a soudée au circuit imprimé 3 est, en position de montage de l'ensemble, en contact avec le corps d'allumage 5 correspondant au 0 volt du véhicule. Par ailleurs, l'autre languette 4b soudée au circuit imprimé est en contact avec la patte du connecteur trois points sous une tension de 12 volts.

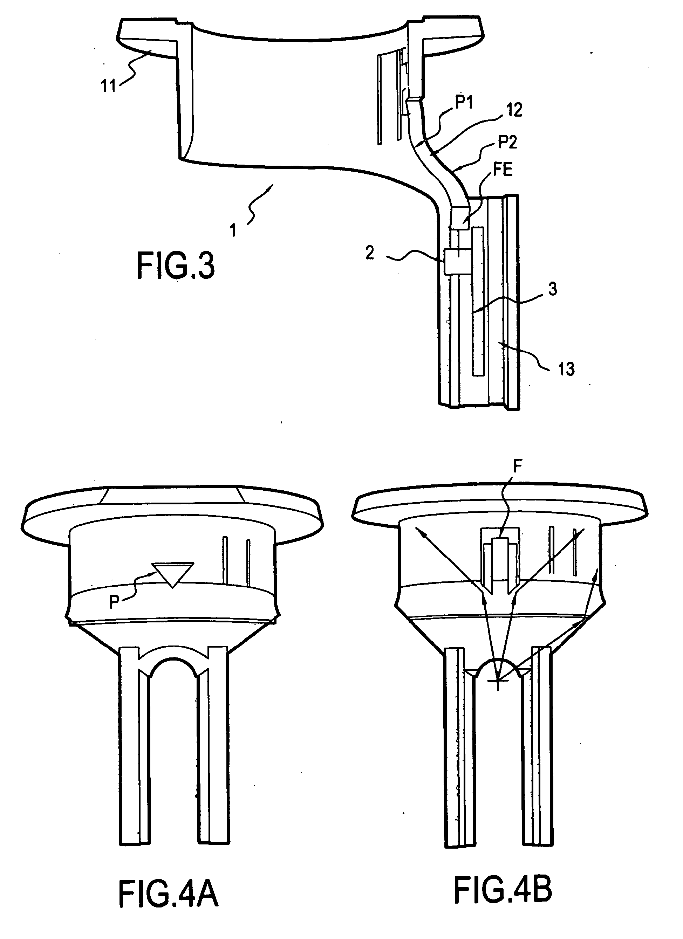

Les figures 3, 4a et 4b illustrent le fonctionnement sur le plan optique du composant monobloc 1 :
- la figure 3 montre une coupe du composant 1 par le centre de la partie 12 faisant office de guide de lumière. Cette partie 12 a un profil évasé reliant les parties 11 et 13. Ce profil présente deux points d'inflexion p1 et p2. En partie basse (dans la représentation de la figure), ce profil s'achève par une surface dite face d'entrée FE qui constitue le point d'injection de la lumière de la diode 2 fixée au circuit imprimé 3. La diode 2 est de type « side emitter », terme anglais désignant les diodes dont la surface émittrice est disposée latéralement, et, de fait perpendiculairement au plan du support de la diode : elle envoie la lumière dans une direction privilégiée parallèle au plan du circuit imprimé par une surface émittrice latérale.

(On peut, alternativement, avoir recours à une diode électroluminescente conventionnelle qui émet perpendiculairement au circuit imprimé, dans ce cas la forme de la partie intermédiaire est à adapter.)

Cette lumière atteint la face d'entrée FE qui a une forme torique facilitant la récupération maximale du flux lumineux. La lumière se propage ensuite de la partie « basse « à la partie « haute » du guide 12 par réflexion totale des rayons d'une paroi du guide à l'autre. (Les termes « basse », « haute », « verticalement » etc. ne font pas référence au positionnement du dispositif une fois monté dans le tableau de bord du véhicule, c'est une commodité d'explication en fonction de la représentation arbitraire des composants sur les figures.)

Sans autre précaution, la bague éclairante 11, dans sa zone à l'aplomb de la face d'entrée, peut éclairer plus fortement que dans le reste de sa circonférence. Deux moyens peuvent éviter la formation d'un « point chaud » sur la bague :
- selon la figure 4a, on modifie localement le profil du guide pour ajouter un prisme P, de façon à « éclater » les rayons qui frappent les deux côtés obliques, à les forcer à repartir dans des directions différentes et non directement verticalement vers la bague 11.
- selon la figure 4b, on interpose non pas un prisme mais une languette de fixation F, qui, outre son rôle mécanique de fixation du composant monobloc 1 sur le corps d'allumage, va également rediriger les rayons de façon plus ou moins aléatoire, et, comme le prisme, diminuer la quantité de rayonnement lumineux parvenant à la bague en se propageant essentiellement verticalement et non latéralement.

Prisme et languette peuvent aussi être rapportés sur le composant 1.

La figure 4b représente le cheminement de deux rayons arbitraires, qui, frappant les bords inférieurs de la languette f repartent dans des directions obliques opposées. A titre d'illustration, le cheminement d'un troisième rayon lumineux partant de la face d'entrée FE de façon beaucoup plus oblique est également représenté sur cette figure. On comprend que la multiplicité des rayons partant de la face d'entrée permet, par une succession de réflexions totales, à la lumière de la diode électroluminescente d'atteindre toute la circonférence de la bague.

La bague, avec ce système de propagation de la lumière, éclaire nettement plus. Pour donner un ordre de grandeur, elle éclaire au moins deux fois plus qu'avec le module éclairant décrit dans le brevet précité EP 1 516 777, pour une diode électroluminescente émettant un même flux lumineux.

La figure 5 détaille le circuit imprimé 3 et ses composants principaux. Il est fixé au logement 13 du composant monobloc par un système de glissières présent dans le logement et dans lequel on peut insérer le circuit par deux de ses bords opposés. Un verrouillage en position est prévu par un système de clipsage utilisant une échancrure 31 disposé sur le flanc du circuit imprimé 3 comme représenté en figure 1.

Le circuit 3 est muni de la diode électroluminescente 2, d'une patte de connexion 4a destinée à être reliée au connecteur 7 (borne -), d'une autre patte 4b reliée électriquement au corps d'allumage 5 (borne +) dont l'extrémité renflée favorise un bon contact électrique avec ledit corps d'allumage 5. Le circuit comprend aussi, notamment, une résistance R pour assurer la chute de tension nécessaire du 12v (ou du 24v) du véhicule au voltage approprié pour l'alimentation de la diode 2 (notamment environ 2,2 v ou 3 v en fonction du type de diode), une diode de protection d pour éviter tout court circuit en cas d'inversion de polarité (qui est optionnelle), un condensateur C de protection contre les surtensions de démarrage (qui est optionnel, et que l'on supprime généralement quand le véhicule est doté d'une alimentation électrique protégée des surtensions). Le circuit comporte toutes les pistes conductrices utiles connues de l'homme de l'art.

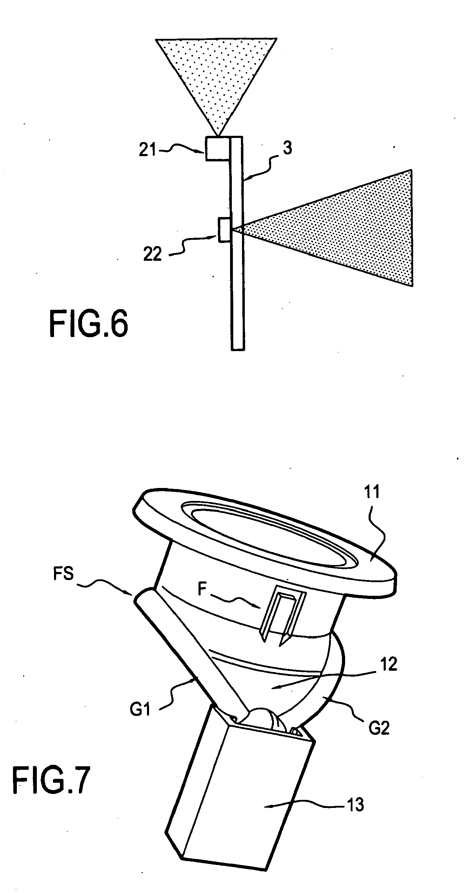

La figure 6 représente une variante de conception du circuit imprimé de l'invention : le circuit comprend non seulement la diode à émission latérale 21, mais aussi une autre diode à émission arrière 22 (« reverse gullwing » en anglais), qui émet donc dans un demi espace du côté de la face opposée du circuit imprimé à la face sur laquelle elle est disposée : la lumière émise par cette diode 22 sert à éclairer tout élément disposé au voisinage sur le tableau de bord, comme un cendrier. Le logement 13 du composant monobloc est éventuellement à adapter de façon appropriée pour laisser la lumière de la diode 22 passer.

La figure 7 représente une variante du composant monobloc 1 : la partie intermédiaire comporte deux renflements latéraux G1,G2 conçus de façon à capter une partie de la lumière de la diode entrant par la face FE, et à diriger cette lumière vers des faces de sortie FS dont elles constituent l'extrémité: ces zones G1,G2 sont donc des petits guides de lumière dans le guide de lumière 12, et permettent de créer , sortant parles faces FS, des spots de lumière pour éclairer des accessoires voisins, tout en continuant à utiliser des circuits imprimés à une seule diode comme celui selon la figure 5.

Les exemples de module éclairants précédentes peuvent s'appliquer aussi bien aux allume-cigare qu'aux prises multi fonction : si on reprend les figures, il suffit de substituer au corps d'allumage 5 un corps de prise multi fonction, de dimensionnement similaire.

## Revendications

1. Dispositif d'éclairage pour allume-cigare ou pour prise multi fonction, comportant un composant monobloc (1) en matériau transmettant au moins partiellement la lumière, ledit composant comportant une bague (11) éclairante et un logement (13) pour un circuit imprimé (3) muni d'au moins d'une diode électroluminescente (2) et de moyens de connexion électrique (4a,4b), **caractérisé en ce que :**
- le composant monobloc (1) comporte une partie intermédiaire (12), entre la bague éclairante (11) et le logement (13) pour le circuit imprimé (3), ladite partie intermédiaire servant de guide de lumière pour conduire la lumière émise par la diode électroluminescente (2) à la bague éclairante (11),
- ladite partie intermédiaire (12) du composant monobloc (1) présente un moyen pour prévenir la formation d'un point chaud de lumière dans la bague éclairante (11) à l'aplomb de sa face d'entrée (FE) de la lumière,
- ledit moyen pour prévenir la formation d'un point chaud comporte un prisme (p) et/ou un moyen de fixation (f) du composant monobloc (1) au reste de l'allume-cigare ou de la prise multi fonction, du type nervure, languette
- ledit prisme (p) et/ou ledit moyen de fixation (f) font partie intégrante du composant monobloc et sont disposés sur le trajet direct de la lumière entre la face d'entrée (FE) de lumière et la zone de la bague éclairante (12) à l'aplomb de ladite face d'entrée.

2. Dispositif selon la revendication précédente, **caractérisé en ce que** le composant monobloc (1) est en matériau transparent à base de polymère, notamment à base de polycarbonate.

3. Dispositif selon l'une des revendications précédentes, **caractérisé en ce que** la partie intermédiaire (12) a un profil courbe, avec au moins un point d'inflexion (P1,P2), notamment deux.

4. Dispositif selon l'une des revendications précédentes, **caractérisé en ce que** la partie intermédiaire (12) comprend au moins une zone dédiée (G1,G2) qui guide une partie de la lumière émise par la diode et se propageant dans la dite partie intermédiaire vers une face de sortie (FS), notamment pour éclairer un accessoire à proximité de la bague (11)

5. Dispositif selon l'une des revendications précédentes 1 ou 2, **caractérisé en ce que** la partie intermédiaire (12) a un profil présentant au moins deux pans inclinés l'un par rapport à l'autre.

6. Dispositif selon l'une des revendications précédentes, **caractérisé en ce que** la partie intermédiaire (12) du composant monobloc (1) présente une face d'entrée (FE) destinée à collecter la lumière émis par la surface émittrice de la diode électroluminescente (2).

7. Dispositif selon la revendication précédente, **caractérisé en ce que** la face d'entrée (FE) de la partie intermédiaire (12) du composant monobloc (1) présente une surface torique ou cylindrique.

8. Dispositif selon l'une des revendications précédentes, **caractérisé en ce que** la partie intermédiaire (12) du composant monobloc (1) est de forme globalement annulaire, avec une forme de préférence évasée vers la bague éclairante (11).

9. Dispositif selon l'une des revendications précédentes, **caractérisé en ce qu'**il est associé à un circuit imprimé (3) inséré au moins en partie dans le logement (13) prévu dans le composant monobloc (1), ledit circuit imprimé étant muni d'un diode (2) et de deux languettes de connexion électrique (L1,L2), notamment fixées par soudure audit circuit.

10. Dispositif selon la revendication précédente, **caractérisé en ce que** le circuit imprimé (3) est muni d'une diode (2,21) de type à émission latérale.

11. Dispositif selon la revendication 9 ou 10, **caractérisé en ce que** le circuit imprimé (3) est muni d'une diode (22) de type à émission arrière.

12. Dispositif selon l'une des revendications précédentes 10 ou 11, **caractérisé en ce que** le circuit imprimé (2) est inséré dans le logement (13) du composant monobloc (1) à l'aide de moyens de guidage prévus dans le logement, notamment du type glissières.

13. Dispositif selon la revendication précédente, **caractérisé en ce que** le circuit imprimé (3) est verrouillé mécaniquement dans le logement (13) du composant monobloc (1), notamment à l'aide d'un système d'ergots et de cavités complémentaires, du type fixation par clipsage.

14. Allume-cigare ou Prise multi-fonction comportant le dispositif selon l'une des revendications précédentes, **caractérisé en ce qu'**il comporte un corps d'allumage (5), respectivement un corps de prise, inséré dans le composant monobloc (1).

## Claims

1. Lighting device for a cigar lighter or for a multifunction socket, comprising a single-piece component (1) made from material at least partially transmitting light, the said component comprising an illuminating ring (11) and a housing (13) for a printed circuit (3) provided with at least one light-emitting diode (2) and electrical connection means (4a, 4b), **characterised in that**:
- the single-piece component (1) comprises an intermediate part (12) between the illuminating ring (11) and the housing (13) for the printed circuit (3), the said intermediate part serving as a light guide for conducting the light emitted by the light-emitting diode (2) to the illuminating ring (11),
- the said intermediate part (12) of the single-piece component (1) has a means for preventing the formation of a hot spot of light in the illuminating ring (11) vertically in line with its entry face (FE) for the light,
- the said means for preventing the formation of a hot spot comprises a prism (p) and/or a means (f) of fixing the single-piece component (1) to the rest of the cigar lighter or the multifunction socket, of the rib or tongue type,
- the said prism (p) and/or the said fixing means (f) form an integral part of the single-piece component and are disposed on the direct path of the light between the entry face (FE) for the light and the area of the illuminating ring (12) vertically in line with the said entry face.

2. Device according to the preceding claim, **characterised in that** the single-piece component (1) is made from transparent material based on polymer, in particular based on polycarbonate.

3. Device according to one of the preceding claims, **characterised in that** the intermediate part (12) has a curved profile, with at least one change-of-direction point (P1, P2), in particular two.

4. Device according to one of the preceding claims, **characterised in that** the intermediate part (12) comprises at least one dedicated area (G1, G2) that guides part of the light emitted by the diode and propagating in the said intermediate part towards an exit face (FS), in particular in order to illuminate an accessory close to the ring (11).

5. Device according to one of the preceding claims 1 or 2, **characterised in that** the intermediate part (12) has a profile having at least two surfaces inclined with respect to each other.

6. Device according to one of the preceding claims, **characterised in that** the intermediate part (12) of the single-piece component (1) has an entry face (FE) intended to collect the light emitted by the emitting surface of the light-emitting diode (2).

7. Device according to the preceding claim, **characterised in that** the entry face (FE) of the intermediate part (12) of the single-piece component (1) has a toric or cylindrical surface.

8. Device according to one of the preceding claims, **characterised in that** the intermediate part (12) of the single-piece component (1) is roughly annular in shape, with a shape preferably splayed towards the illuminating ring (11).

9. Device according to one of the preceding claims, **characterised in that** it is associated with a printed circuit (3) at least partly inserted in the housing (13) provided in the single-piece component (1), the said printed circuit being provided with a diode (2) and two electrical connection tongues (L1, L2), in particular fixed by soldering to the said circuit.

10. Device according to the preceding claim, **characterised in that** the printed circuit (3) is provided with a diode (2, 21) of the lateral emission type.

11. Device according to claim 9 or 10, **characterised in that** the printed circuit (3) is provided with a diode (22) of the rear emission type.

12. Device according to one of the preceding claims 10 or 11, **characterised in that** the printed circuit (2) is inserted in the housing (13) of the single-piece component (1) using guidance means provided in the housing, in particular of the runner type.

13. Device according to the preceding claim, **characterised in that** the printed circuit is mechanically locked in the housing (13) of the single-piece component (1) in particular by means of a system of complementary lugs and cavities, of the type for fixing by clipping.

14. Cigar lighter or multifunction socket comprising the device according to one of the preceding claims, **characterised in that** it comprises an ignition body (5), or respectively a socket body, inserted in the single-piece component (1).

## Patentansprüche

1. Beleuchtungsvorrichtung für Zigarettenanzünder oder Multifunktionssteckdose mit einem einstückigen Bauteil (1) aus einem Licht zumindest teilweise übertragenden Werkstoff, wobei das Bauteil einen Leuchtring (11) und eine Aufnahme (13) für eine gedruckte Schaltung (3) umfasst, die mit wenigstens einer Leuchtdiode (2) und elektrischen Anschlussmitteln (4a, 4b) versehen ist, **dadurch gekennzeichnet, dass**
- das einstückige Bauteil (1) ein Zwischenstück (12) zwischen dem Leuchtring (11) und der Aufnahme (13) für die gedruckte Schaltung (3) umfasst, wobei das Zwischenstück als Lichtleiter zum Leiten des von der Leuchtdiode (2) abgegebenen Lichts zum Leuchtring (11) dient,
- das Zwischenstück (12) des einstückigen Bauteils (1) ein Mittel zur Verhinderung der Bildung eines Hotspots in dem Leuchtring (11) senkrecht zur Eintrittsfläche (FE) des Lichts aufweist,
- das Mittel zur Verhinderung der Bildung eines Hotspots ein Prisma (p) und/oder ein Mittel (f) zum Befestigen des einstückigen Bauteils (1) am übrigen Teil des Zigarettenanzünders oder der Multifunktionssteckdose vom Typ Rippe, Zunge aufweist,
- das Prisma (p) und/oder das Befestigungsmittel (f) Bestandteil des einstückigen Bauteils sind und auf dem direkten Lichtweg zwischen der Lichteintrittsfläche (FE) und dem Bereich des Leuchtrings (12) senkrecht zur Eintrittsfläche angeordnet sind.

2. Vorrichtung nach dem vorhergehenden Anspruch,
**dadurch gekennzeichnet, dass** das einstückige Bauteil (1) aus lichtdurchlässigem Material auf Polymerbasis, insbesondere auf Polycarbonatbasis besteht.

3. Vorrichtung nach einem der vorhergehenden Ansprüche,
**dadurch gekennzeichnet, dass** das Zwischenstück (12) ein gebogenes Profil hat mit wenigstens einem, insbesondere zwei Krümmungspunkten (P1, P2).

4. Vorrichtung nach einem der vorhergehenden Ansprüche,
**dadurch gekennzeichnet, dass** das Zwischenstück (12) wenigstens einen dedizierten Bereich (G1, G2) aufweist, der einen Teil des von der Diode abgegebenen und sich in dem Zwischenstück ausbreitenden Lichts zur Austrittsfläche (FS) hin leitet, insbesondere um ein Zubehör in der Nähe des Rings (11) zu beleuchten.

5. Vorrichtung nach einem der vorhergehenden Ansprüche 1 oder 2,
**dadurch gekennzeichnet, dass** das Zwischenstück (12) ein Profil hat, das wenigstens zwei zueinander geneigte Flächen aufweist.

6. Vorrichtung nach einem der vorhergehenden Ansprüche,
**dadurch gekennzeichnet, dass** das Zwischenstück (12) des einstückigen Bauteils (1) eine Eintrittsfläche (FE) aufweist, die zum Erfassen des von der Emissionsfläche der Leuchtdiode (2) abgegebenen Lichts bestimmt ist.

7. Vorrichtung nach dem vorhergehenden Anspruch,
**dadurch gekennzeichnet, dass** die Eintrittsfläche (FE) des Zwischenstücks (12) des einstückigen Bauteils (1) eine torische oder zylindrische Oberfläche aufweist.

8. Vorrichtung nach einem der vorhergehenden Ansprüche,
**dadurch gekennzeichnet, dass** das Zwischenstück (12) des einstückigen Bauteils (1) allgemein ringförmig ist, mit einer vorzugsweise zum Leuchtring (11) hin erweiterten Form.

9. Vorrichtung nach einem der vorhergehenden Ansprüche,
**dadurch gekennzeichnet, dass** sie einer gedruckten Schaltung (3) zugeordnet ist, die wenigstens zum Teil in die in dem einstückigen Bauteil (1) vorgesehene Aufnahme (13) eingefügt ist, wobei die gedruckte Schaltung mit einer Diode (2) und zwei Stromanschlusszungen (L1, L2) versehen ist, die insbesondere durch Löten an der Schaltung befestigt sind.

10. Vorrichtung nach dem vorhergehenden Anspruch,
**dadurch gekennzeichnet, dass** die gedruckte Schaltung (3) mit einer Diode (2, 21) vom Typ mit seitlicher Lichtausstrahlung versehen ist.

11. Vorrichtung nach Anspruch 9 oder 10,
**dadurch gekennzeichnet, dass** die gedruckte Schaltung (3) mit einer Diode (22) vom Typ mit rückwärtiger Lichtausstrahlung versehen ist.

12. Vorrichtung nach einem der vorhergehenden Ansprüche 10 oder 11,
**dadurch gekennzeichnet, dass** die gedruckte Schaltung (3) in die Aufnahme (13) des einstückigen Bauteils (1) mit Hilfe von Führungsmitteln eingeführt ist, die in der Aufnahme vorgesehen und insbesondere vom Typ Gleitführung sind.

13. Vorrichtung nach dem vorhergehenden Anspruch,
**dadurch gekennzeichnet, dass** die gedruckte Schaltung (3) in der Aufnahme (13) des einstückigen Bauteils (1) insbesondere mit Hilfe eines Systems aus Zapfen und dazu komplementären Vertiefungen vom Typ Befestigung durch Festklipsen mechanisch verriegelt ist.

14. Zigarettenanzünder oder Multifunktionssteckdose mit der Vorrichtung nach einem der vorhergehenden Ansprüche,
**dadurch gekennzeichnet, dass** er bzw. sie ein Zündgehäuse (5) bzw. eine Steckdosenbuchse umfasst, das bzw. die in das einstückige Bauteil (1) eingeführt ist.
